# EUROPEAN PATENT APPLICATION

(11) **EP 4 831 452 A1**
(43) Date of publication of application: **28.10.2026**
(21) Application number: 26174053.4
(22) Date of filing: 22.04.2026
(51) Int. Cl.: F01D 25/18, F01D 5/02, F02C 7/06, F16H 57/04

(54) **GAS TURBINE OUTPUT SHAFT OIL DISTRIBUTION**

(30) Priority: 23.04.2025 US 202519187435
(71) Applicant: Pratt & Whitney Canada Corp., Longueuil, Québec J4G 1A1 (CA)
(72) Inventor: LANDRY-DROLET, Guillaume, Boucherville (CA); DESJARDINS, Michel, Saint-Hubert (CA)
(74) Representative: Dehns

(57) **Abstract**

A lubricant arrangement of a rotating shaft includes a shaft (26) rotatable about a shaft axis (25), and a lubricant source operably connected to the shaft (26). A plurality of shaft passages (48) extends axially along an internal wall of the shaft (26), and a plurality of shaft orifices (52) are fluidly connected to the plurality of shaft passages (48) and to the lubricant source. Each shaft passage (48) is dedicated to providing a flow of lubricant to one downstream component arranged along the shaft (26).

## Description

### FIELD

This application pertains to the art of aircraft systems, and in particular to lubrication of components of a gearbox connected to an aircraft engine.

### BACKGROUND

Oil is circulated in gearboxes to lubricate components such as bearings, splines, and other portions of the engine gearbox. In some systems, the oil flow is transferred from an oil passage into an interior of a rotating shaft of the gearbox. It is desired to improve distribution of oil flow to these components to ensure a longer service life of the components and of the gearbox. Additionally, it is desired to reduce risk of contamination of the oil flow before the oil flow reaches the components to be lubricated.

### SUMMARY

In one embodiment, a lubricant arrangement of a rotating shaft includes a shaft rotatable about a shaft axis, and a lubricant source operably connected to the shaft. A plurality of shaft passages extends axially along an internal wall of the shaft, and a plurality of shaft orifices are fluidly connected to the plurality of shaft passages and to the lubricant source. Each shaft passage is dedicated to providing a flow of lubricant to one downstream component arranged along the shaft.

Additionally or alternatively, in this or other embodiments a plurality of exit openings are formed in the shaft. Each exit opening of the plurality of exit openings is fluidly connected to a shaft passage of the plurality of shaft passages.

Additionally or alternatively, in this or other embodiments each of the downstream components are positioned at different axial locations along the shaft.

Additionally or alternatively, in this or other embodiments the plurality of shaft orifices are configured to direct the flow of lubricant radially inwardly onto a cylindrical surface radially inboard of the plurality of shaft passages.

Additionally or alternatively, in this or other embodiments the plurality of shaft orifices are fluidly connected to a lubricant cavity disposed at an exterior surface of the shaft, the lubricant cavity configured to contain a volume of lubricant.

Additionally or alternatively, in this or other embodiments a lubricant passage of the plurality of lubricant passages has a partially circular cross-sectional shape.

Additionally or alternatively, in this or other embodiments the downstream component is one of a spline, a clutch or a bearing.

In another embodiment, a gearbox of a gas turbine engine includes an output shaft rotatable about a shaft axis. The output shaft is configured to connect to one or more accessory components. A lubricant arrangement is configured to provide lubricant flow to one or more components of the accessory gearbox. The lubricant arrangement includes a lubricant source operably connected to the output shaft and a plurality of shaft passages extending axially along an internal wall of the output shaft. A plurality of shaft orifices are fluidly connected to the plurality of shaft passages and to the lubricant source. Each shaft passage is dedicated to providing a flow of lubricant to one downstream component of the accessory gearbox arranged along the output shaft.

Additionally or alternatively, in this or other embodiments a plurality of exit openings are formed in the output shaft. Each exit opening of the plurality of exit openings is fluidly connected to a shaft passage of the plurality of shaft passages.

Additionally or alternatively, in this or other embodiments each of the downstream components are positioned at different axial locations along the output shaft.

Additionally or alternatively, in this or other embodiments the plurality of shaft orifices are configured to direct the flow of lubricant radially inwardly onto a cylindrical surface radially inboard of the plurality of shaft passages.

Additionally or alternatively, in this or other embodiments the plurality of shaft orifices are fluidly connected to a lubricant cavity disposed at an exterior surface of the output shaft. The lubricant cavity is configured to contain a volume of lubricant.

Additionally or alternatively, in this or other embodiments a lubricant passage of the plurality of lubricant passages has a partially circular cross-sectional shape.

Additionally or alternatively, in this or other embodiments the downstream component is one of a spline, a clutch or a bearing.

In yet another embodiment, a gas turbine engine system includes a gas turbine engine and an gearbox operably connected to the gas turbine engine. The gearbox is configured to extract energy from the gas turbine engine. The gearbox includes an output shaft rotatable about a shaft axis. The output shaft is configured to connect to one or more downstream components. A lubricant arrangement is configured to provide lubricant flow to one or more components of the gearbox. The lubricant arrangement includes a lubricant source operably connected to the output shaft, and a plurality of shaft passages extending axially along an internal wall of the output shaft. A plurality of shaft orifices are fluidly connected to the plurality of shaft passages and to the lubricant source. Each shaft passage is dedicated to providing a flow of lubricant to one downstream component of the gearbox arranged along the output shaft.

Additionally or alternatively, in this or other embodiments a plurality of exit openings are formed in the output shaft. Each exit opening of the plurality of exit openings is fluidly connected to a shaft passage of the plurality of shaft passages.

Additionally or alternatively, in this or other embodiments each of the downstream components are positioned at different axial locations along the output shaft.

Additionally or alternatively, in this or other embodiments the plurality of shaft orifices are configured to direct the flow of lubricant radially inwardly onto a cylindrical surface radially inboard of the plurality of shaft passages.

Additionally or alternatively, in this or other embodiments the plurality of shaft orifices are fluidly connected to a lubricant cavity disposed at an exterior surface of the output shaft. The lubricant cavity is configured to contain a volume of lubricant.

Additionally or alternatively, in this or other embodiments the downstream component is one of a spline, a clutch or a bearing.

### BRIEF DESCRIPTION OF THE DRAWINGS

The following descriptions should not be considered limiting in any way. With reference to the accompanying drawings, like elements are numbered alike:
FIG. 1 is a schematic cross-sectional view of an embodiment of a gas turbine engine;
FIG. 2 is a schematic illustration of an embodiment of a lubricant transfer arrangement of a gas turbine engine; and
FIG. 3 is a cross-sectional view of an embodiment of a lubricant transfer arrangement of a gas turbine engine;
FIG. 4 is a schematic illustration of an intersection of a shaft passage and a shaft orifice in one embodiment;
FIG. 5 is a schematic illustration of an embodiment of a first lubricant pathway along a shaft passage;
FIG. 6 is a schematic illustration of an embodiment of a second lubricant pathway along a shaft passage; and
FIG. 7 is a schematic illustration of an embodiment of a third lubricant pathway along a shaft passage.

### DETAILED DESCRIPTION

A detailed description of one or more embodiments of the disclosed apparatus and method are presented herein by way of exemplification and not limitation with reference to the Figures.

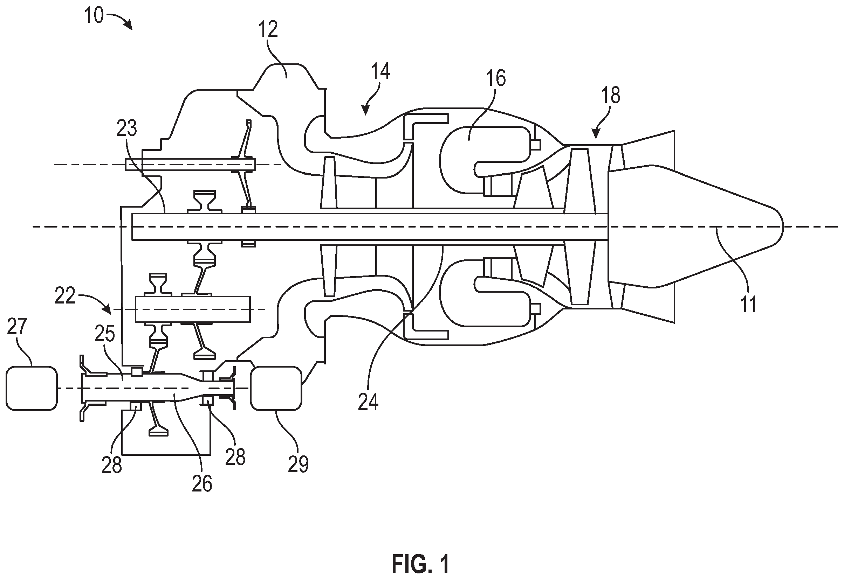

FIG.1 illustrates a gas turbine engine 10 of a type preferably provided for use in subsonic flight, generally comprising in serial flow communication an inlet 12 through which ambient air enters the gas turbine engine 10, a compressor section 14 for pressurizing the air, a combustor 16 in which the compressed air is mixed with fuel and ignited for generating an annular stream of hot combustion gases, and a turbine section 18 for extracting energy from the combustion gases. The compressor section 14, the turbine section 18, the low pressure shaft 23 and the high pressure shaft 24 are rotatable about a central axis 11 of the engine 10.

A low pressure shaft 23 is drivingly connected to low pressure rotor(s) of the turbine section 18, and the high pressure rotor(s) of the compressor section 14 is/are drivingly connected to high pressure rotor(s) of the turbine section 18 through a high pressure shaft 24 concentrically surrounding the low pressure shaft 23.

The gas turbine engine 10 is, in some embodiments, utilized to propel a helicopter, and may include a transfer gear box 22 operably connected to an output through shaft 26, which rotates about a shaft axis 25 offset from the central axis 11. The output through shaft 26 is supported by bearings 28, and is in turn operably connected to a main rotor gearbox 27 at a first end of the output through shaft 26 and a tail rotor gearbox 29 at a second end of the output through shaft 26. In the illustrated embodiment, the output through shaft 26 is operably connected to and driven by the low pressure shaft 23.

One skilled in the art will readily appreciate that this configuration is merely exemplary, and that in other embodiments the bearing and shaft arrangement discussed herein may relate to, for example, bearings 28 supportive of different components of the engine 10, such as the high-or low-pressure shafts 24,23 and gearbox components of the gas turbine engine 10. Those bearings 28 may be located within bearing cavities, which may be connected to a source of lubricant for cooling and lubricating the bearings. In some cases, the bearing cavities are connected to a source of compressed air, such as a stage of the compressor section 16, for maintaining a pressure outside the bearing cavities greater than that inside them to limit leakage of lubricant. In the description below, the terms "lubricant" and "oil" are used interchangeably.

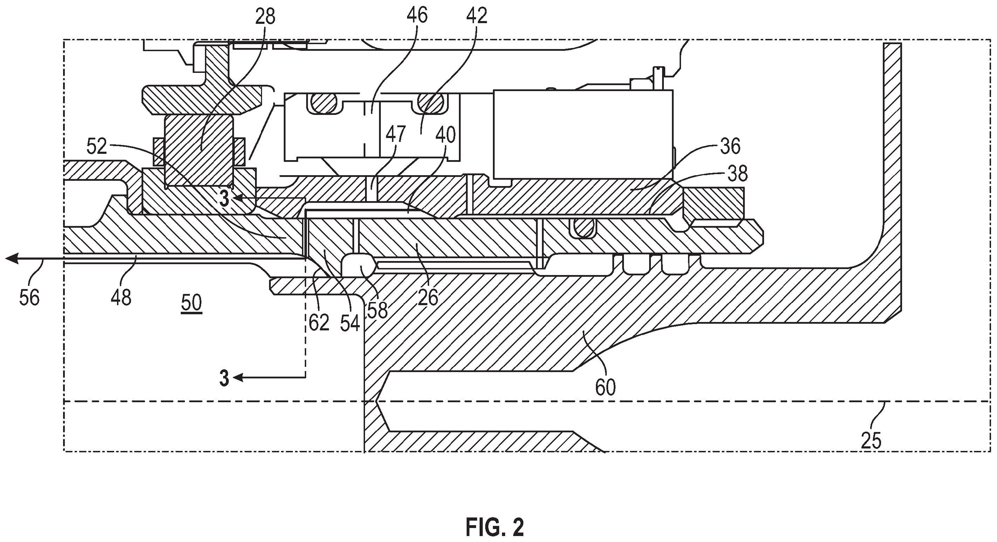

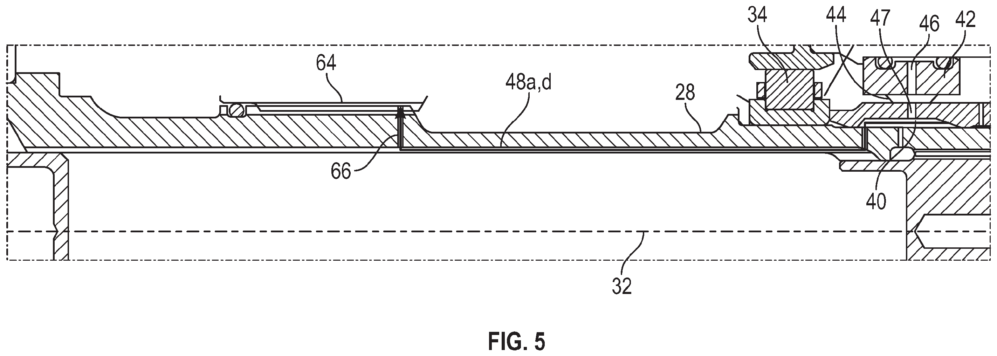

Referring now to FIG. 2, shown is an exemplary embodiment of an embodiment of a shaft 26 arrangement. The shaft 26 is configured to rotate about a shaft axis 25, and is supported by at least bearing 28. A shaft sleeve 36 is located at a shaft outer surface 38, and defines a lubricant cavity 40 between the shaft 26 and the shaft sleeve 36. The shaft sleeve 36 is connected to and rotate with shaft 26 about the shaft axis 25. An oil transfer seal 42 is located radially outboard of the shaft sleeve 36. The oil transfer seal 42 is a rotationally fixed element and includes first seal elements 44, shown for example in FIG. 5, such as lip seals, brush seals, controlled gap seals or the like to seal between the oil transfer seal 42 and the shaft sleeve 36. Oil or other lubricant is fed into the lubricant cavity 40 via one or more seal passages 46 in the oil transfer seal 42 and one or more sleeve passages 47 in the shaft sleeve 36.

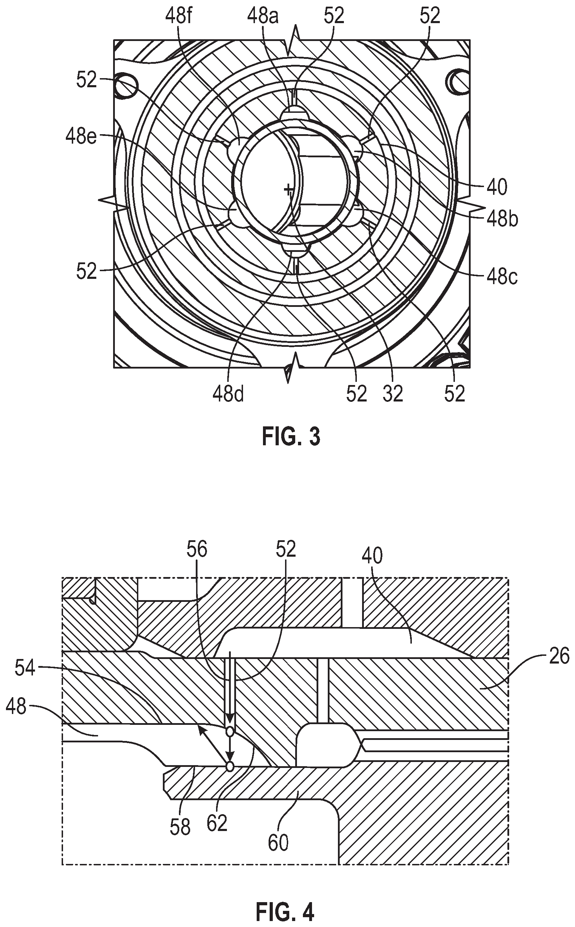

The flow of pressurized lubricant is directed into a plurality of shaft passages 48 defined in a shaft interior 50 of the shaft 26 and is directed axially along the shaft passages 48 to one or more components to be lubricated by the flow of lubricant. A plurality of shaft orifices 52 extend through a shaft wall 54 connecting the lubricant cavity 40 and the shaft passages 48. As shown in FIG. 3, the lubricant cavity 40 is annular and extends around the shaft axis 25 and is connected to each of the shaft orifices 52, which are each connected to a different shaft passage 48 of the plurality of shaft passages 48, so that flow along each of the shaft passages 48 is independent of each other. In the embodiment of FIG. 3, six shaft passages 48 and six corresponding shaft orifices 52 are arranged around the shaft axis 25, and in some embodiments are equally spaced around the shaft axis 25. In some embodiments, the shaft passages 52 and 48 are equal in cross-sectional size and identical in cross-sectional shape, while in other embodiments the cross-sectional size and/or shape may be varied to provide desired flow rates and pressures along each of the shaft passages 48. In the embodiment of FIG. 3, each of the flow passages 48 is partially circular in cross-sectional shape, while in other embodiments the flow passages 48 may have other cross-sectional shapes.

Referring now to FIG. 4, a cross-sectional view of an intersection of a shaft passage 48 and a shaft orifice 52 is illustrated. The shaft orifice 52 is configured to direct the flow of lubricant 56 radially inwardly onto a cylindrical surface 58 of a coupling shaft 60 located radially inboard of the shaft 26. The shaft wall 54 includes a sloping surface 62 that extends toward the coupling shaft 60, The flow of lubricant 56 is directed toward the shaft passages 48 via rotation of the shaft 26 and the coupling shaft 60. Surface 62 acts as an axial wall allowing the lubricant to accumulate in passage 48. When lubricant reaches surface 58, rotation of the shaft 28 propels lubricant radially outwards into passages 48.

Referring now to FIGS. 5-7, and with reference to FIG. 3, the plurality of shaft passages 48 are configured to direct the flow of lubricant 56 to different components for lubrication. For example, the embodiment of FIG. 3 includes six shaft passages 48a, 48b, 48c, 48d, 48e, 48f. In the configuration illustrated, the shaft passages 48 are configured as pairs, with each pair of shaft passages 48 configured to direct lubricant to a different location. Utilizing the paired configuration provides redundancy in the case of blockage of one of the shaft passages 48 of the pair.

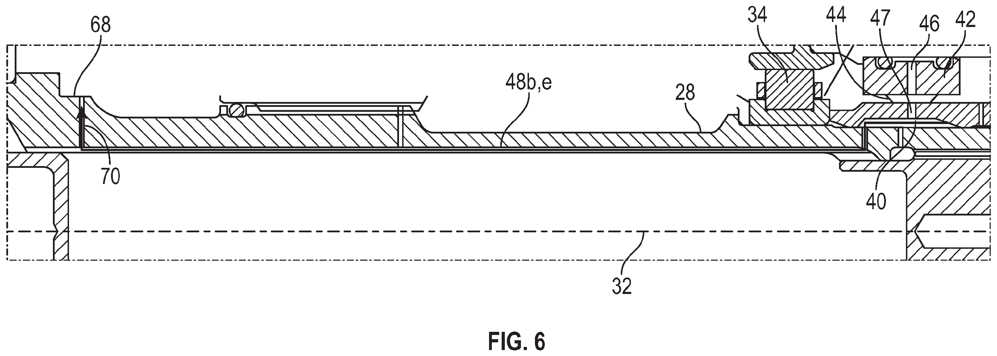

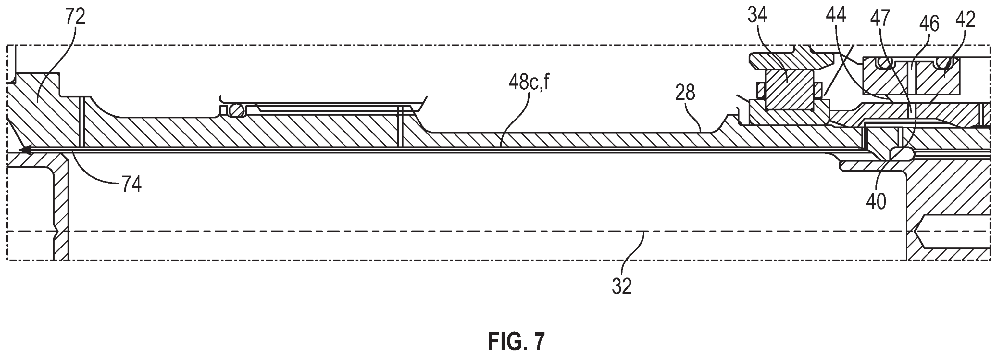

For example, as illustrated in FIG. 5, shaft passages 48a and 48d are dedicated to directing flow of lubricant 56 to, for example, a first spline 64 via first exit openings 66 in the shaft 28. As illustrated in FIG. 6, shaft passages 48b and 48e are dedicated to directing flow of lubricant 56 to, for example, a second spline 68 via second exit openings 70 in the shaft 28. As shown in FIG. 7, shaft passages 48c and 48f are dedicated to providing lubricant flow 56 to a third location, for example, a clutch 72 via third exit openings 74 in the shaft 28. One skilled in the art will readily appreciate that the quantity of shaft passages 48 and the components to be lubricated described and illustrated herein are merely exemplary and that other such quantities and components are contemplated within the scope of the present disclosure.

Providing such dedicated shaft passages 48,52 and exit openings 66, 70 and 74 to distribute the lubricant flow 56 to different components ensures proper lubrication of each of the components, and additionally provides redundancy in the case of blockage of a shaft passage 48, 52 and exit openings 66, 70 and 74. Additionally, having dedicated shaft passages 48 reduces risk of contamination of the lubricant flow 56 by eliminating pass-through of the flow of lubricant 56 from one component to another, Dedicated passages 48 additionally increase flexibility in adjusting lubricant flow to meet the lubrication requirements of each of the components. This can be achieved by, for example, changing a size or shape of passages 52 and/or exit openings 66, 70 and 74.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A lubricant arrangement of a rotating shaft, comprising:
a shaft rotatable about a shaft axis;
a lubricant source operably connected to the shaft;
a plurality of shaft passages extending axially along an internal wall of the shaft; and
a plurality of shaft orifices fluidly connected to the plurality of shaft passages and to the lubricant source;
wherein each shaft passage is dedicated to providing a flow of lubricant to one downstream component arranged along the shaft.

2. The lubricant arrangement of claim 1, further comprising a plurality of exit openings formed in the shaft, each exit opening of the plurality of exit openings fluidly connected to a shaft passage of the plurality of shaft passages.

3. The lubricant arrangement of claim 1 or 2, wherein each of the downstream components are disposed at different axial locations along the shaft.

4. The lubricant arrangement of claim 1, 2 or 3, wherein the plurality of shaft orifices are configured to direct the flow of lubricant radially inwardly onto a cylindrical surface radially inboard of the plurality of shaft passages.

5. The lubricant arrangement of any of preceding claim, wherein the plurality of shaft orifices are fluidly connected to a lubricant cavity disposed at an exterior surface of the shaft, the lubricant cavity configured to contain a volume of lubricant.

6. The lubricant arrangement of any preceding claim, wherein a shaft passage of the plurality of shaft passages has a partially circular cross-sectional shape.

7. The lubricant arrangement of any preceding claim, wherein the downstream component is one of a spline, a clutch or a bearing.

8. A gearbox of a gas turbine engine, comprising:
an output shaft rotatable about a shaft axis, the output shaft configured to connect to one or more accessory components; and
a lubricant arrangement to provide lubricant flow to one or more components of the accessory gearbox, including:
a lubricant source operably connected to the output shaft;
a plurality of shaft passages extending axially along an internal wall of the output shaft; and
a plurality of shaft orifices fluidly connected to the plurality of shaft passages and to the lubricant source;
wherein each shaft passage is dedicated to providing a flow of lubricant to one downstream component of the accessory gearbox arranged along the output shaft.

9. The gearbox of claim 8, wherein a shaft passage of the plurality of shaft passages has a partially circular cross-sectional shape.

10. A gas turbine engine system, comprising:
a gas turbine engine; and
an gearbox operably connected to the gas turbine engine, the gearbox configured to extract energy from the gas turbine engine, the gearbox including:
an output shaft rotatable about a shaft axis, the output shaft configured to connect to one or more downstream components; and
a lubricant arrangement to provide lubricant flow to one or more components of the gearbox, including:
a lubricant source operably connected to the output shaft;
a plurality of shaft passages extending axially along an internal wall of the output shaft; and
a plurality of shaft orifices fluidly connected to the plurality of shaft passages and to the lubricant source;
wherein each shaft passage is dedicated to providing a flow of lubricant to one downstream component of the gearbox arranged along the output shaft.

11. The gearbox of claim 8 or 9 or the gas turbine engine system of claim 10, further comprising a plurality of exit openings formed in the output shaft, each exit opening of the plurality of exit openings fluidly connected to a shaft passage of the plurality of shaft passages.

12. The gearbox of claim 8, 9 or 11 or the gas turbine engine system of claim 10 or 11, wherein each of the downstream components are disposed at different axial locations along the output shaft.

13. The gearbox of claim 8, 9, 11 or 12 or the gas turbine engine system of claim 10, 11 or 12, wherein the plurality of shaft orifices are configured to direct the flow of lubricant radially inwardly onto a cylindrical surface radially inboard of the plurality of shaft passages.

14. The gearbox of claim 8, 9, 11, 12 or 13 or the gas turbine engine system of any of claims 10 to 13, wherein the plurality of shaft orifices are fluidly connected to a lubricant cavity disposed at an exterior surface of the output shaft, the lubricant cavity configured to contain a volume of lubricant.

15. The gearbox of any of claims 8, 9, 10 to 14 or the gas turbine engine system of any of claims 10 to 14, wherein the downstream component is one of a spline, a clutch or a bearing.
